(19)

Europäisches
Patentamt
European
Patent Office
Office européen
des brevets

(11) **EP 3 248 937 A1**

(12) **EUROPEAN PATENT APPLICATION**

(43) Date of publication:
**29.11.2017 Bulletin 2017/48**

(51) Int Cl.:
***C01B 32/00*** *(2017.01)*

(21) Application number: **16382227.3**

(22) Date of filing: **24.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Repsol, S.A.**
**28045 Madrid (ES)**

(72) Inventors:
• **PÁEZ DUEÑAS, Antonio**
  **E-28935 Móstoles (ES)**
• **GARCÍA SAN LUIS, Jesús**
  **E-28935 Móstoles (ES)**
• **ALÍA MORENO-ORTIZ, Francisco José**
  **E-28935 Móstoles (ES)**
• **BARRANCO, Violeta**
  **E-28049 Madrid (ES)**

• **CLIMENT, Esteban**
  **E-28049 Madrid (ES)**
• **DE ANDRÉS, Alicia**
  **E-28049 Madrid (ES)**
• **ROJO, Jose María**
  **E-28049 Madrid (ES)**
• **PEDRÓS, Jorge**
  **E-28040 Madrid (ES)**
• **MARTÍNEZ, Javier**
  **E-28040 Madrid (ES)**
• **BOSCÁ, Alberto**
  **E-28040 Madrid (ES)**
• **CALLE, Fernando**
  **E-28040 Madrid (ES)**

(74) Representative: **ABG Patentes, S.L.**
**Avenida de Burgos, 16D**
**Edificio Euromor**
**28036 Madrid (ES)**

(54) **DIRECT PROCESS FOR FABRICATION OF FUNCTIONALISED 3D GRAPHENE FOAMS**

(57) The present invention provides a process for preparing a graphene or a graphene-like foam. The invention also relates to a process for preparing a functionalised three-dimensional graphene foam or graphene-like foam. The functionalised graphene or graphene-like foam of the invention can be used as electrode or as 3D current collector of an electrochemical-energy storage device.

Figure 4

**Description**

FIELD OF THE ART

The present invention relates to a process for preparation of a 3D graphene foam and/or a functionalised 3D graphene foam. The process of the present invention may be used for obtaining 3D graphene and functionalised 3D graphene foams as suitable electrodes for electrochemical-energy-storage devices.

STATE OF THE ART

Energy storage devices are increasingly present in a number of mass consumer goods such as hybrid and electric vehicles or portable electronics. They are also getting quickly into other fields such as energy harvesting and power grids, wherein high capacity, capacitance and fast charging speed are key aspects. However, the development of next-generation flexible electronics and wearable devices requires of flexible power sources that combine superior electron and ion conductivity with robust mechanical flexibility, and excellent cycling stability.

Particularly, in the search of electrode materials for supercapacitors, special relevance is given to graphene because of its high electrical conductivity, large surface area and profuse interlayer structure, theoretically meeting the requirements of high performance supercapacitors. Graphene foams having high specific surface area, strong mechanical strengths and fast electron transport, may assist in charge transfer allowing a facile flow of electronic charges and improving the interfacial properties between electrode and electrolyte.

Several methods are reported so far to prepare 3D graphene foams. Among these methods, template chemical vapor deposition is the most widely used method. Chen et al. [Nat. Mat., 2011, vol.10, 424-428] report the synthesis of 3D graphene foams by Chemical Vapor deposition (CVD) using a 3D macroporous Ni foam as a template. A thin layer of polymethyl methacrylate (PMMA) coating the graphene foam, prevents the graphene network from collapsing during nickel etching with hot HCl or $FeCl_3$ solution.

In addition, several authors have reported electrodes wherein pseudo-capacitive materials, such as metal oxides, are deposited on the graphene foam. For example, X.

Dong et al. [Carbon 2012, vol. 50, 4865-4870] report a $MnO_2$-graphene foam hybrid for use as a supercapacitor electrode. In the process disclosed, the graphene foam is deposited on a nickel foam by CVD. The Ni foam is etched away with HCl at 80°C, leaving the free-standing graphene foam. The 3D graphene foam obtained is then immersed into a $KMnO_4$ solution to obtain the $MnO_2$-graphene foam hybrid. The 3D graphene foam serves as both supporting substrate and sacrificial reductant, since the carbon atoms of graphene foam convert $Mn^{7+}$ to $Mn^{4+}$ leading to the formation of $MnO_2$ nanostructures. The specific capacitances obtained with the electrodes of $MnO_2$-graphene foam hybrid disclosed are between 188.4 F/g and 560 F/g.

T. Mauyalagan et al. [J. Matter. Chem. 2012, vol. 22, 5286-5290] disclose a graphene foam for use as an electrode wherein platinum nanoparticles are electrodeposited on the surface of the graphene foam. The disclosed graphene foams are prepared by CVD using a nickel foam as template. After the growth process, the nickel substrate is etched away with HCl at 80°C to obtain free-standing graphene foams. The platinum nanoparticles are deposited on the graphene foam by electrodeposition, applying a pulse potential profile.

Kulkarni et al. [J. Mater. Chem. A, 2014, vol. 2, 4989-4998] report a supercapacitor electrode based on PANI nanofibers adsorbed on a 3D graphene foam surface. The graphene foam is prepared by CVD using a nickel foam as template. After the growth process, the nickel substrate is etched away with an etchant to obtain a free-standing graphene foam. The graphene foam obtained is immersed in a solution containing aniline monomers.

Yager et al. [US 2013/0021718 A1] report a porous graphene electrode material wherein pseudo-capacitive materials, such as $RuO_2$, $Fe_3O_4$, or$MnO_2$, coat a 3D open-cell graphene structure. The graphene structure is prepared by depositing graphene on the metal foam by chemical vapor deposition. The metal foam is removed from the structure by a metal dissolution process in an etching solution of iron nitrate or ferric chloride, leaving an open-cell graphene structure. A thin pseudo-capacitive material layer is deposited by electroless deposition on the open-cell graphene foam to form an open-cell foam graphene pseudo-capacitive material composite.

The methods known in the art to prepare graphene electrodes based on 3D graphene foams include the dissolution of the metal foam in etching mediums that eventually damage the graphene foam structure. In some of the reported methods a polymer film is deposited on the graphene foam to protect the graphene structure from collapsing during the metal foam etching. Further, some additional experimental steps are required to functionalise the graphene foams with metal particles, oxides or conductive polymers, to be used in energy storage devices. Very often, said functionalisation also requires the subsequently manipulation of the graphene foam. Therefore, there is a need of a simple and straight method to prepare a graphene foam in mild conditions avoiding the damage of the 3D structure during the metal foam removal. In addition, there is a need in the art for a process to functionalise the graphene foam avoiding the handling of the foam that may damage the structure of the graphene.

Brief description of the invention

The object of the present invention is to provide a simple and straight process for preparing a 3D graphene foam or graphene-like foam avoiding the damage of its structure during the metal foam removal. The process provided by the present invention can also allow the dissolution of the metal template and the further functionalisation of the free-standing graphene foam or graphene-like foam to be carried out "in situ" in the same electrochemical cell, without the need of any manipulation or handling of the free-standing structures. The process of the invention allows obtaining high quality graphene foams or graphene-like foam in one step, thus reducing the production costs.

Therefore, in a first aspect the invention is directed to a process (from now onwards process 1) for preparing a three-dimensional graphene foam or graphene-like foam, wherein said process comprises:

a) providing a three-dimensional metal foam framework,

b) depositing graphene onto the metal foam framework, so that the graphene reproduces the morphology of the metal foam framework, thus forming a three-dimensional graphene or graphene-like foam deposited onto the metal foam framework,

c) introducing the three-dimensional graphene or graphene-like foam deposited onto the metal foam framework obtained in step b) in an electrochemical cell, said electrochemical cell comprises:

- at least three electrodes, and
- an electrochemical solution having a Standard Reduction Potential ($E^0$) of less than 0.22 V, and wherein said electrochemical solution is devoid of any complexing agent,

d) applying a voltage scanning within a range of between -0.8 and 0.8 V to the electrochemical cell used in step c) to produce the partial or total dissolution of the metal foam framework.

By contrast with the known processes in the art, the metal foam dissolution according to the process 1 of the present invention is carried out in one step, under mild conditions at room temperature, thus avoiding the damage of the three-dimensional graphene or graphene-like foam during the metal foam removal. Moreover, the dissolution of the metal can be controlled and stopped at any time if a desired thickness of the metal foam is wanted to be maintained. In addition, the inner part of the remnant metal foam can be in-situ modified by forming a thin oxide layer which will increase the foam specific capacitance.

Further, the process 1 of the invention produces the homogeneous dissolution of the metal foam, so that even graphene foams having a low thickness e.g. monolayer graphene or bilayer graphene, and thus a high fragility, can be obtained by the process 1 of the invention.

The invention also relates to the three-dimensional graphene foam or graphene-like foam obtainable by the above mentioned process in which the metal foam framework is partially dissolved, so as said graphene foam or graphene-like foam comprises a metal foam framework having a uniform thickness of between 50 and 500 nm homogeneously distributed throughout the graphene foam or graphene-like foam.

In another aspect, the invention is directed to a process (from now onwards process 2) for preparing a functionalised three-dimensional graphene or graphene-like foam, said process comprises:

a) providing a three-dimensional metal foam framework,

b) depositing graphene onto the metal foam framework, so that the graphene reproduces the morphology of the metal foam framework, thus forming a three-dimensional graphene or graphene-like foam deposited onto the metal foam framework,

c) introducing the three-dimensional graphene or graphene-like foam deposited onto the metal foam framework obtained in step b) in an electrochemical cell, said electrochemical cell comprises:

- at least three electrodes, and

- an electrochemical solution having a Standard Reduction Potential ($E^0$) of less than 0.22 V and, wherein said electrochemical solution is devoid of any complexing agent,

d) applying a voltage scanning within a range of between-0.8 and 0.8 V to the electrochemical cell used in step c) to produce the partial or total dissolution of the metal foam framework;

e) functionalising the three-dimensional graphene or graphene-like foam obtained in step d) by electrodeposition in an electrochemical solution comprising functionalising agents or precursors thereof.

In a preferred embodiment, the process for preparing a functionalised three-dimensional graphene or graphene-like foam according to the process 2 of the invention is an in-situ process. In this embodiment, the dissolution of the metal foam framework and the functionalisation of the three-dimensional graphene or graphene-like foam take place in the same electrochemical cell, thus reducing time and production costs.

Additionally, the invention also refers to a functionalised three-dimensional graphene or graphene-like foam obtainable by the process as defined above.

In a further aspect, the invention is directed to an electrode comprising the functionalised three-dimensional graphene or graphene-like foam obtainable by the process 2 as defined above, to a current collector comprising the three-dimensional graphene foam or graphene-like foam obtainable by the process 1 as defined above, and to an electrochemical-energy-storage device comprising said electrode and/or said current collector.

Figures

The accompanying drawings, which are incorporated in and constitute a part of this specification, illustrate exemplary embodiments of the invention and, together with the written description, serve to explain the principles of the invention. In the drawings:

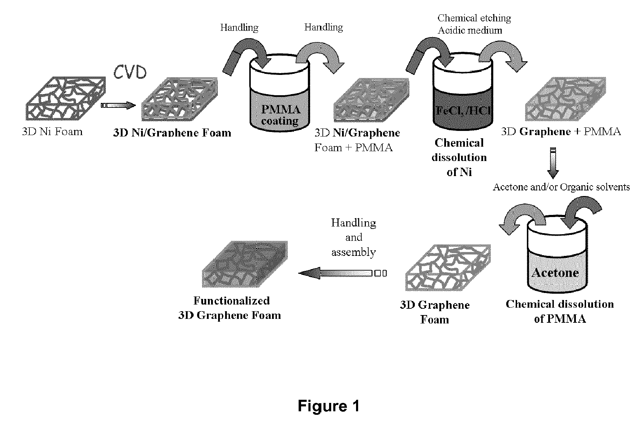

Figure 1 is a schematic representation of the common process in the art for preparing a functionalised graphene foam wherein a PMMA layer is deposited on the graphene foam before etching the metal template.

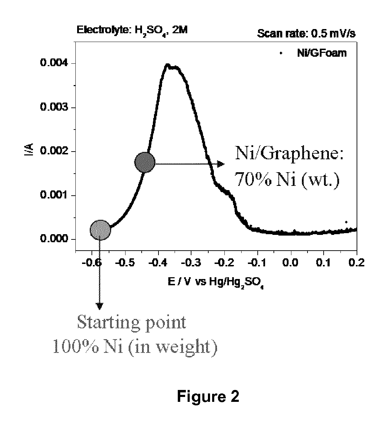

Figure 2 is a graph showing the detected changes in the intensity of the current when a voltage scanning within a range of between -0.6 to 0.2 V is applied on an exemplary Ni/graphene foam of the invention.

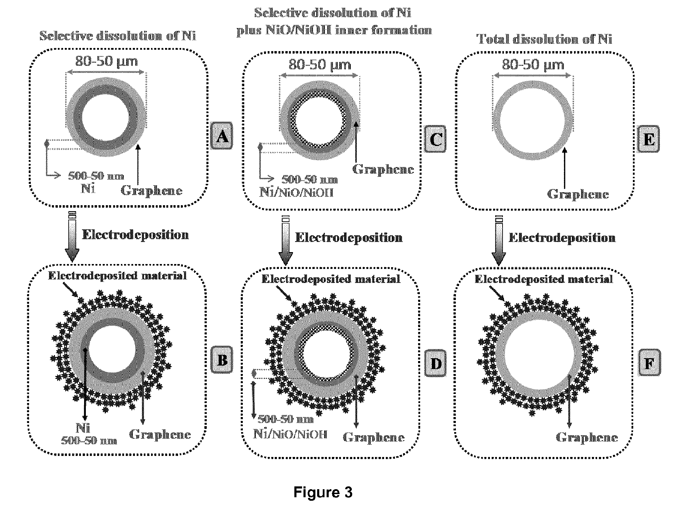

Figure 3: represents a scheme of the different products that can be obtained with the in-situ process of the invention; a) Ni dissolution step where the Ni foam has been partially eliminated, b) electrodeposition step on a graphene foam wherein the metal foam has been partially dissolved, c) Ni dissolution step where the Ni foam has been partially eliminated and subsequently a NiO/NiOH layer is formed at the inner part of the remnant Ni foam, d) electrodeposition step on a graphene foam illustrated in figure 3c, e) Ni dissolution step where the Ni foam has been totally eliminated, and f) electrodeposition step on a graphene foam illustrated in figure 3e. The shape and dimensions of the graphene foam and the remaining metal foam are not at scale. The scheme illustrates the arrangement of the components in the 3D resulting framework.

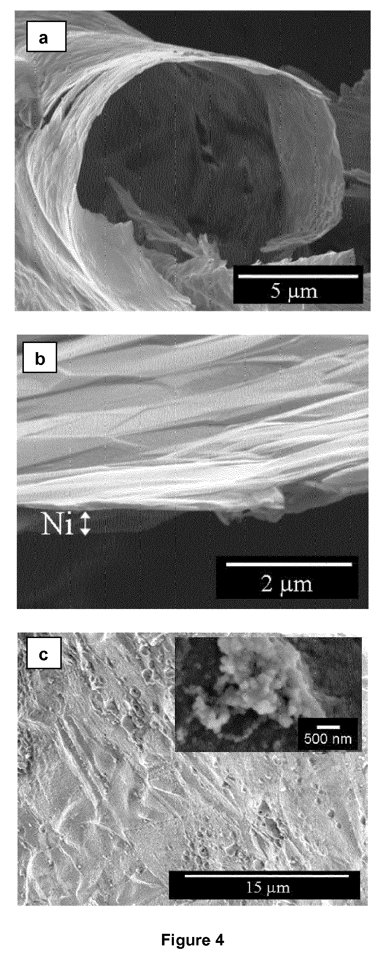

Figure 4: a) Scanning Electron Micrograph of the graphene foam at the final stage of the nickel dissolution process; b) Cross section of the obtained 3D graphene foam after the nickel dissolution process of the invention; c) Scanning Electron Micrograph of the functionalised 3D graphene foam surface obtained by potentiodynamic cathodic electrodeposition from a sulfate solution containing nickel (II) ions.

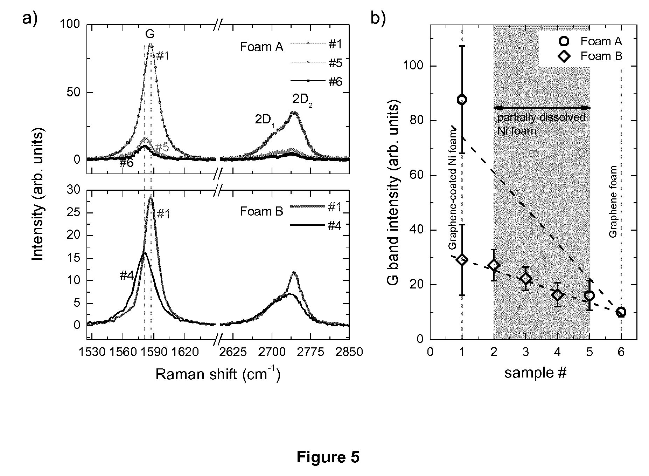

Figure 5: a) Raman spectra of graphene-coated nickel foam (spectra #1, series A and B), graphene on partially dissolved nickel foam (spectrum #5, series A; and spectrum #4, series B), and graphene foam after complete dissolution of nickel (spectrum #6, series A); b) G band intensity evolution for series A and B.

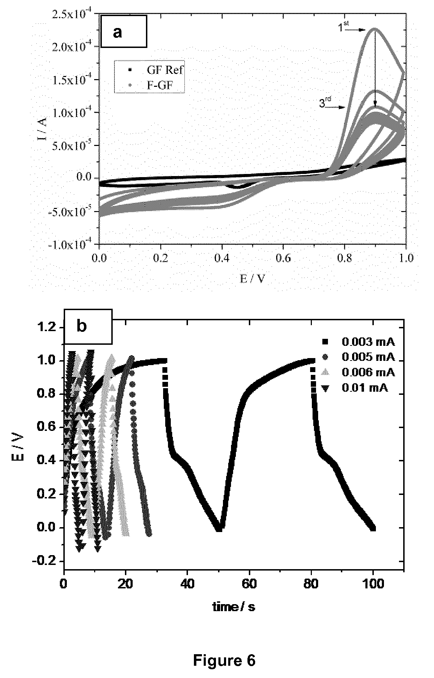

Figure 6: a) Cyclic voltammetry (CV) at 5 mV/s scan rate in 1 M KOH solution of the functionalised 3D graphene foam sample (F-GF) and of the 3D graphene foam (GF Ref) obtained in the process 1 (black); and b) galvanostatic plots (GCs) obtained in 1 M KOH electrolyte at different current densities for the functionalised 3D graphene foam samples (F-GF)

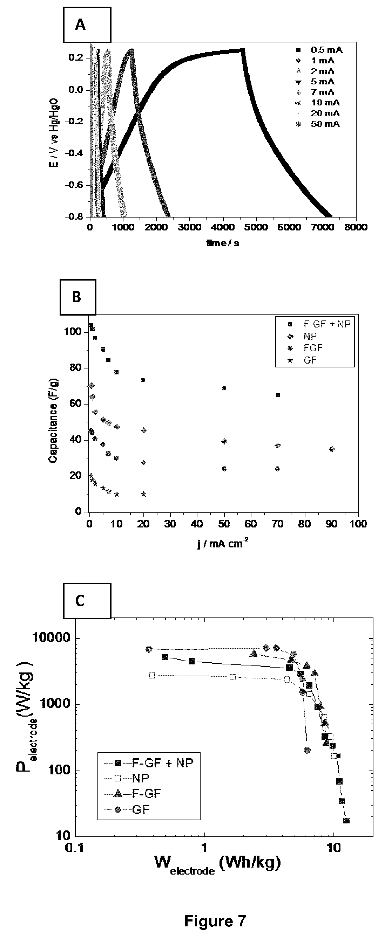

Figure 7: A) Galvanostatic plots (GCs) obtained in 1 M KOH electrolyte at different current densities for the functionalised 3D graphene foam samples (F-GF) filled with a carbon material NP (F-GF+NP); B) graph showing the dependence of specific capacitance vs. the current density for the 3D graphene/Ni foam (GF) electrode, the functionalized 3D graphene/Ni foam (FGF) electrode, the electrode formed by a carbon material (NP), and the electrode formed by the functionalized 3D graphene/Ni foam (F-GF) with the pores filled with the carbon material NP (F-GF+NP); and C) Ragone plot showing the variation of power density (P) vs. energy density (W) for the 3D graphene/Ni foam (GF) electrode, functionalized 3D graphene/Ni foam (F-GF) electrode, the electrode formed by a carbon material (NP), and the electrode formed by the functionalized 3D Graphene/Ni foam with the pores filled with the carbon material NP (F-GF+NP).

Detailed description of the invention

The present invention relates to a process 1 for preparing a three-dimensional graphene foam or a graphene-like foam, said process comprises:

a) providing a three-dimensional metal foam framework,

b) depositing graphene onto the metal foam framework, so that the graphene reproduces the morphology of the metal foam framework, thus forming a three-dimensional graphene or graphene-like foam deposited onto the metal foam framework,

c) introducing the three-dimensional graphene or graphene-like foam deposited onto the metal foam framework obtained in step b) in an electrochemical cell, said electrochemical cell comprises:

- at least three electrodes, and
- an electrochemical solution having a Standard Reduction Potential ($E^0$) of less than 0.22 V, and wherein said electrochemical solution is devoid of any complexing agent,

d) applying a voltage scanning within a range of between -0.8 and 0.8 V to the electrochemical cell used in step c) to produce the partial or total dissolution of the metal foam framework.

According to step a), a three dimensional metal foam framework is provided. In the context of the present invention, by the term "metal foam framework" it is understood an open-cell structure having a plurality of pores, wherein by contrast to a closed-cell structure, inner surfaces of individual pores are accessible from neighboring pores.

Three-dimensional metal foams which may be suitable in the context of the present invention include aluminum, scandium, manganese, iron, cobalt, nickel, ruthenium, or copper foams. Preferably, nickel, copper, ruthenium, iron, or cobalt three-dimensional foams. More preferably, nickel three-dimensional foam.

According to step b) graphene is deposited onto the metal foam framework provided in step a), so that the graphene reproduces the morphology of the metal foam framework, thus forming a three-dimensional (3D) graphene foam or graphene-like foam deposited onto the metal foam framework.

In the context of the present invention, the term "graphene" refers to a single carbon layer or carbon mono-layer, wherein carbon atoms are arranged in a honey comb lattice; or to a multilayer graphene, wherein the number of carbon layers is between 1 and 10, more preferably from 1 to 5 carbon layers.

In the context of the present invention, the term "graphene-like" refers to a multilayer graphene wherein the number of carbon layers is larger than 10.

The process 1 of the invention can be used for preparing a graphene or a graphene-like foam.

In one embodiment, graphene in three-dimensional graphene or graphene-like foam is multi-layer graphene or mono-layer graphene. The term "multi-layer graphene" refers to multiple layers of single atomic graphene. The graphene in the graphene foam may have between 1 and 20 layers. Preferably, the graphene foam has between 1 and 15 layers, more preferably between 5 and 10 layers.

In a particular embodiment, graphene is deposited on the surfaces of the metal foam framework by chemical vapor deposition (CVD), plasma-assisted CVD or gelation onto the metal foam framework suitable for producing graphene. Chen and coworkers [Nature Materials, vol. 10 (2011) 424-428] first developed a general strategy for the synthesis of 3D graphene foams using template-directed CVD. The procedure consisted of the decomposition of $CH_4$ at 1000°C under ambient pressure in the presence of a highly interconnected 3D scaffold of nickel. In the context of the present invention, the CVD process may use any suitable materials and conditions for forming the graphene foam or graphene-like foam.

The obtained 3D graphene foam or graphene-like foam including graphene films precipitated on the metal foam exhibits a continuous and interconnected graphene 3D network in which all the graphene sheets are in direct contact with each other without breaks, copying and inheriting the interconnected 3D scaffold structure of the metal-foam template.

In the context of the present invention, the term "graphene foam" or "three-dimensional graphene foam" refers to a graphene structure having a plurality of pores where inner surfaces of individual pores are accessible from neighboring pores. In a particular embodiment, the pores of the graphene foam have a mean diameter ranging from 5 to 500 $\mu$m, preferably the mean diameter of the pores is at least 50 $\mu$m, more preferably the mean diameter ranges from 100 to 500 $\mu$m, more preferably from 200 to 500 $\mu$m, even more preferably from 300 to 500 $\mu$m.

In a particular embodiment, the conductivity of the three-dimensional graphene foam or graphene-like foam is comprised between 1 and 100 S/cm.

According to step c), the 3D graphene foam or graphene-like foam deposited onto the metal foam framework obtained in step b) is introduced in an electrochemical cell, said electrochemical cell comprising:

- at least three electrodes, and

- an electrochemical solution having a Standard Reduction Potential ($E^0$) of less than 0.22 V, and wherein said electrochemical solution is devoid of any complexing agent,

In the context of the present invention, the at least three electrodes of the electrochemical cell of step c) include:

- a counter electrode (CE),
- a reference electrode (RE), and
- a working electrode (WE).

In the context of the present invention, by the term "counter electrode" (CE), or auxiliary electrode it is understood an electrode which is used to close the current circuit in the electrochemical cell. Preferably, the counter electrode is made of an inert material such as Pt, Au, graphite or glassy carbon. The counter electrode does not usually participate in the electrochemical reaction.

In the context of the present invention, by the term "reference electrode" (RE) it is understood an electrode which has a stable and well-known electrode potential, and it is used as a point of reference in the electrochemical cell for the measurement and control of the potential. Suitable reference electrodes in the context of the present invention include silver/silver chloride (Ag/AgCl) electrode, Saturated Calomel Electrode (SCE), and mercury/mercury oxide ($Hg/Hg_2SO_4$) electrode.

In one particular embodiment, the reference electrode is a silver/silver chloride electrode (Ag/AgCl in saturated KCl). This electrode consists of a Ag wire in contact with AgCl in a saturated KCl solution. The electrode potential of this electrode is +0.197 V vs a standard hydrogen electrode (SHE) at 25° C.

In another particular embodiment, the reference electrode is a Saturated Calomel Electrode (SCE) ($Hg/Hg_2Cl_2$ in saturated KCl).The electrode potential of this electrode is +0.241 V vs. SHE at 25°C.

In another particular embodiment, the reference electrode is a mercury/mercury sulphate electrode ($Hg/Hg_2SO_4$ in 0.5 M $H_2SO_4$). The electrode potential of this electrode is +0.680 V vs SHE.

In another particular embodiment, the reference electrode is a mercury/mercury oxide electrode (Hg/HgO in 1 M NaOH) in alkaline solutions. The electrode potential of this electrode is +0.140 V vs. SHE.

The high stability of the reference electrode potential is usually reached by employing a redox system with constant (buffered or saturated) concentrations of each participant of the redox reaction. Moreover, the current flow through the reference electrode is kept close to zero (ideally, zero) which is achieved by using the CE to close the current circuit in the cell, together with a very high input impedance on the electrometer (> 100 GΩ).

In a particular embodiment, a platinum mesh is used as counter electrode together with a $Hg/Hg_2SO_4$ reference electrode. By the term "working electrode" (WE) it is understood the electrode in the electrochemical cell on which the reaction of interest is occurring. In a particular embodiment, the working electrode is an electrode comprising the 3D graphene or graphene-like foam deposited onto the metal foam framework obtained in step b) of the process 1 provided by the present invention for preparing a graphene foam.

In a particular embodiment, the electrochemical cell further comprises a fourth electrode working as second CE to improve the current distribution.

The current generally flows between the counter (CE) and the working (WE) electrodes. The potential difference is usually controlled between the WE and the CE, and measured at the RE (kept at close proximity of the WE). This configuration allows controlling the potential across the electrochemical interface at the WE with respect to the RE.

The electrochemical solution in the electrochemical cell in step c) having a Standard Reduction Potential ($E^0$) of less than 0.22 V and devoid of any complexing agent, is able to dissolve the metal foam framework within the electrochemical potential-pH (E-pH) range of stability of water determined by the corresponding Pourbaix diagram.

In the context of the present invention, the term "complexing agent" refers to a chelating agent or sequestering agent that forms complex compounds by binding metal ions in solution. Complexing agents known in the art include $FeCl_3$, acetic acid, succinic acid, amino acetic acid, malonic acid, pyrophosphoric acid, maleic acid and citric acid.

Preferably, the electrochemical solution is an aqueous solution. In a preferred embodiment, the electrochemical solution is acidic or neutral. In a particular embodiment, the electrochemical solution comprises sulfuric acid, sodium sulfate, or combinations thereof. In a preferred embodiment, the electrochemical solution is a $H_2SO_4$ solution 2M or a $Na_2SO_4$ solution 1 M.

According to step d), a voltage scanning within a range of between -0.8 and 0.8 V is applied to the electrochemical cell used in step c) to produce the partial or total dissolution of the metal foam framework. Preferably, a voltage scanning within a range of between -0.6 and 0.2 V is applied. More preferably, a voltage scanning within a range of between -0.6 and -0.1 V is applied.

When a voltage scanning within a range of between -0.8 and 0.8 V is applied, the intensity of the current generally changes as the metal is dissolved (see figure 2). Thus, when the metal foam is totally dissolved, a voltage of -0.1 and 0.0 V is usually achieved, and the intensity of the current generally falls to zero amperes. The dissolution process may be stopped at any time by controlling the range of the voltage scanning applied, in order to produce the partial dissolution of the metal foam framework.

The potentiodynamic anodic dissolution process can be repeated several times until the total elimination of the metal foam framework depending of the amount of metal which constitutes the 3D metal foam.

The mass of the dissolved metal follows the Faraday law (Equation 1):

$$m = \frac{I*t}{F} * \frac{M}{z}$$

where, m is the mass of the dissolved metal, M is the molar mass, z is the valence (number of electrons), F=96485 C/mol is the Faraday constant, and the product of the current by the time, I*t, provides the total electric charge.

In a particular embodiment, the metal foam framework is a nickel foam framework, wherein the nickel dissolved by the process of the invention follows the Faraday law above described.

Moreover, the authors have found that the increase of the scanning rate produces an increase in the dissolution rate, changing the profile of the intensity of the current measure and reducing the process time. Therefore, in a particular embodiment the voltage scanning in step d) is carried out at a scanning rate of between 0.2 and 5 mV/s. In another preferred embodiment, the voltage scanning is carried out at a scanning rate comprised between 0.5 and 3 mV/s, preferably between 1 and 2 mV/s. More preferably, the voltage scanning in step d) is carried out at a scanning rate of between 0.2 mV/s and 1 mV/s. Scanning rates over 5 mV/s may damage the graphene structure.

In a preferred embodiment, a nickel foam framework is dissolved by applying a voltage scanning at a scanning rate of between 0.2 mV/s and 1 mV/s.

The methods known in the art include the dissolution of the metal foam by chemical wet etching with acids such as HCl at temperatures over 80°C. The acid conditions and temperature applied lead to the complete removal of the metal foam, so that once the dissolution has started, it cannot be stopped until the total dissolution of the metal foam.

Other methods in the prior art involve the deposition of a polymer on the graphene foam before the removal of the metal foam, to prevent any damage in the graphene foam during the chemical etching of the metal. However this coating processes requires handling the sample, and a number of steps that can eventually lead to damage the graphene foam structure.

By contrast, the dissolution process provided by the present invention is a controlled dissolution process that may be carried out in one step at room temperature. The process can be stopped at any time in order to control the remaining metal foam thickness in the graphene foam. Moreover, the dissolution process provided produces a homogeneous attack in the metal foam, so that the structural integrity of the graphene foam is maintained. This effect is of particular relevance for graphene foams of low thickness having between 1 and 5 graphene layers, that can easily collapse during the metal removal, and to which the metal support provides structural stability.

The process 1 of the invention provides a 3D graphene or graphene-like foam in which the metal foam framework is partially or totally dissolved depending on the applied voltage range and the electrochemical solution in the electrochemical cell. Thus, the use of an electrochemical cell comprising at least three electrodes, and an electrochemical solution having a Standard Reduction Potential (E[0]) of less than 0.22 V together with the application of a voltage range allow controlling the removal of the metal foam framework to the extent that a uniform thickness of metal foam can be maintained if desired. Thus, the 3D graphene foam or graphene-like foam obtainable by means of the process 1 of the invention constitutes an additional aspect of the invention. Particularly, in one aspect, the invention relates to the graphene foam or graphene-like foam obtainable by the above process in which the metal foam framework is partially dissolved, so as said graphene foam comprises a metal foam framework having a uniform thickness of between 50 and 500 nm homogeneously distributed throughout the graphene foam or graphene-like foam. The uniform thickness of the remaining metal foam framework in the graphene foam or graphene-like foam improves the mechanical properties of the graphene foam, conferring structural stability and bending strength to the graphene foam structure.

In one particular embodiment the 3D graphene or graphene-like foam of the invention comprising remnant metal foam may be oxidised or partially oxidised into the corresponding oxides or hydroxides increasing the specific capacitance due to the high pseudo-capacitance of these materials. Figure 3c shows a representative scheme of the resulting 3D graphene or graphene-like foam comprising remnant metal and a thin layer of metal oxides and metal hydroxides.

In another aspect the invention provides a process for preparing a functionalised three-dimensional graphene foam or graphene-like foam (process 2), said process comprises:

a) providing a three-dimensional metal foam framework,

b) depositing graphene onto the metal foam framework, so that the graphene reproduces the morphology of the metal foam framework, thus forming a three-dimensional graphene or graphene-like foam deposited onto the metal foam framework,

c) introducing the three-dimensional graphene foam or graphene-like foam deposited onto the metal foam framework obtained in step b) in an electrochemical cell, said electrochemical cell comprises:

- at least three electrodes, and

- an electrochemical solution having a Standard Reduction Potential ($E^0$) of less than 0.22 V, wherein said electrochemical solution is devoid of any complexing agent,

d) applying a voltage scanning within a range of between -0.8 and 0.8 V to the electrochemical cell used in step c) to produce the partial or total dissolution of the metal foam framework;

e) functionalising the three-dimensional graphene or graphene-like foam obtained in step d) by electrodeposition in an electrochemical solution comprising functionalising agents or precursors thereof.

Steps a) to d) have been previously described in the process 1.

The term "functionalisation" refers to adding new functions, features, capabilities, or properties to a material by changing the surface chemistry of the material. In the context of the present invention, the term "functionalisation of the graphene foam" or "functionalisation of the graphene-like foam" refers to adding new functions, features, capabilities, or properties to the graphene foam or graphene-like foam by electrodepositing functionalising agents or precursors of the functionalising agents on the surface of the graphene foam or graphene-like foam. Preferably, the functionalisation of the graphene foam or graphene-like foam refers to the electrodeposition of pseudo-capacitive functionalising agents on the surface of the graphene foam or graphene-like foam to improve its electrochemical properties.

As used herein "electrodeposition" is the deposition of the functional groups on the surface of the graphene foam or graphene-like foam that occurs upon the application of an electrical potential.

Electrodeposition can be carried out under a variety of electrochemical conditions including among others: (a) constant current, (b) constant voltage, (c) current scan/sweep, e.g., via a single or multiple scans/sweeps, (d) voltage scan/sweep, e.g., via a single or multiple scans/sweeps, (e) current square waves or other current pulse wave forms, (f) voltage square waves or other voltage pulse wave forms, and (g) a combination of different current and voltage parameters.

In a preferred embodiment, the electrodeposition is performed in situ, i.e., in the same electrochemical cell wherein the metal foam has been total or partially dissolved. That is, in an electrochemical cell comprising at least three electrodes, and an electrochemical solution having a Standard Reduction Potential ($E^0$) of less than 0.22 V, and wherein said electrochemical solution is devoid of any complexing agent, but also includes functionalising agents or precursors thereof. Current is passed between the working and the counter electrodes, while the potential is measured against the reference electrode. The graphene foam or graphene-like foam acts as the working electrode.

In another particular embodiment, the functionalization by electrodeposition can also be carried out in an electrochemical cell different from the one used in step c). Said electrochemical cell also comprises an electrochemical solution comprising functionalizing agents or precursors thereof.

In a particular embodiment, the potential applied during the electrodeposition process is pulsed. When the electrodeposition process is pulsed, the potential is alternated between two different values resulting in a series of pulses of equal amplitude, duration and polarity, separated by zero current. In a preferred embodiment, a pulsed potential along with a stirrer is applied during the electrodeposition. In another particular embodiment, the potential applied during the electrodeposition process is continuous (DC). More preferably, a continuous potential along with a stirrer is used during the electrodeposition process.

In one embodiment, starting from the open circuit potential of 0.25 V vs Ag/AgCl, a 0.5 mV/s scan rate is applied up to reach a potential value of -0.9 V vs Ag/AgCl, and then the process continues backwards at the same scan rate until reach the initial electrochemical potential.

In a particular embodiment, the electrodeposition is carried out at room temperature, i.e. 20°C. Preferably, the electrodeposition process is carried out between -5 and 30°C. Even more preferably, the electrodeposition process is carried out between 15 and 30°C. More preferably the temperature during the electrodeposition process is comprised between 15 and 25°C.

The electrochemical solution in step e) comprises functionalising agents or precursors thereof. In one particular embodiment, the functionalising agents are selected from any transition metal having several oxidation states, such as manganese, nickel, cobalt, vanadium, ruthenium, aqueous solutions of metallic salts, organometallics and mixtures thereof. In another preferred embodiment, the functionalising agent of the graphene foam or graphene-like foam is selected from metal oxides or hydroxides. In another particular embodiment, the precursors of the functionalising agents are monomers of conductive polymers. Preferably, the precursors of the functionalising agents are monomers selected from anilines, pyrroles, carbazoles, indoles, azepines, thiophenes, 3,4-ethylenedioxythiophenes, phenylene sulfides, fluorenes, phenylenes, pyrenes, azulenes, naphtalenes, acetylenes, phenylenevinylenes and derivatives thereof. More preferably, the precursors of the functionalising agents are monomers selected from anilines, pyrroles, carbazoles, and derivatives thereof.

In a particular embodiment, when the electrodeposition is carried out in the same electrochemical cell as in step c), the electrochemical solution comprises metal ions from the dissolution of the metal foam, so that metal oxides or hydroxides thereof may be deposited on the graphene foam or graphene-like foam. Alternatively, the electrochemical solution comprises metal ions from the dissolution of the metal foam and additional metallic ions, so that mixed oxides may be deposited on the graphene foam or graphene-like foam.

In another particular embodiment, the electrochemical solution in the electrochemical cell in step c) of the process is replaced by another electrochemical solution comprising functionalising agents or precursors thereof. Optionally, the dissolved species resulting from the total or partial dissolution of the metal foam may be removed from the electrochemical solution by the introduction of an additional suitable electrode in the electrochemical cell that promotes the electrodeposition of the dissolved species. Once the dissolved species are electrodeposited in the additional electrode, the functionalizing agents or precursors thereof are added to the electrochemical solution.

During the electrodeposition process, the time of application of the voltage scanning is preferably at least 1 min, preferably the electrodeposition time is comprised between 1 min and 100 min, more preferably the electrodeposition time is comprised between 1 and 60 min. Even more preferably, the electrodeposition time is comprised between 1 and 30 min. In a preferred embodiment the electrodeposition time is 18 min. More preferably, the electrodeposition time is 9 min.

In another particular embodiment, the invention relates to functionalised three-dimensional graphene foam or graphene-like foam obtainable by the process 2 above defined. In a preferred embodiment, the 3D graphene foam or graphene-like foam obtainable by the process 2 of the invention is functionalised with a functionalisation agent selected from any transition metal having several oxidation states such as manganese, nickel, cobalt or mixtures thereof. In another preferred embodiment, the 3D graphene foam or graphene-like foam is functionalised with metal oxides or hydroxides. In another preferred embodiment, the 3D graphene foam or graphene-like foam is functionalised with a conductive polymer such as polyaniline, polypyrrol, polycarbazol, polyindol, polyazepine, polythiophene, poly(3,4-ethylenedioxythiophene), polyphenylene sulfide, polyfluorene, polyphenylene, polypyrene, polyazulene, polynaphtalene, polyacetylene, polyphenylenevinylene and derivatives thereof. More preferably, the 3D graphene foam or graphene-like foam is functionalised with a conductive polymer selected from polyaniline, polypyrrol, polycarbazol, and derivatives thereof.

In another particular embodiment, the invention relates to the functionalised 3D graphene foam or functionalised graphene-like foam obtainable by the process 2 above defined in which the metal foam framework is partially dissolved. In a particular embodiment, the functionalised 3D graphene foam or functionalised 3D graphene-like foam comprises a metal foam framework having a uniform thickness of between 50 and 500 nm homogeneously distributed throughout the functionalised three-dimensional graphene foam or graphene-like foam. In a preferred embodiment, the functionalised three-dimensional graphene foam or graphene-like foam comprises a metal foam having a thickness of between 100 and 400 nm, more preferably, between 200 nm and 350 nm, even more preferably a thickness of 300 nm. A scheme of the functionalised three-dimensional graphene foam or graphene-like foam according to this embodiment is shown in figure 3b.

The presence of the partially dissolved metal foam framework, such as a nickel metal foam, having a uniform thickness within the functionalised three-dimensional graphene or graphene-like foam confers structural stability to the graphene foam as well as improves the mechanical properties of the functionalised graphene foam or graphene-like foam, such as the bending strength and fracture toughness.

Further, the specific capacitance of the resulting product is increased after the partial or total dissolution of the metal foam because of the increase in the specific area due to the loss of metal weight. Moreover, when the dissolution is only partial, the remaining metal in the graphene foam or graphene-like foam may be oxidised or partially oxidised into the corresponding oxides or hydroxides increasing the specific capacitance due to the high pseudo-capacitance of these materials. Figure 3d shows a representative scheme of the resulting functionalised 3D graphene or graphene-like foam comprising remnant metal and a thin thin layer of metal oxides and metal hydroxides

Industrial applicability

The functionalised three-dimensional graphene or graphene-like foam of the present invention is useful in a wide variety of applications where materials with high surface area, electrical conductivity or low weight would be desirable. In one possible application, the functionalised three-dimensional graphene foam or graphene-like foam of the present invention may serve as an electrode. Thus, one aspect of the present invention relates to an electrode comprising the functionalised 3D graphene foam or graphene-like foam. In another possible application, the 3D graphene foam or graphene-like foam of the present invention may serve as a current collector. Thus, one aspect of the present invention relates to a current collector comprising the 3D graphene foam or graphene-like foam of the invention.

By contrast with the metallic foam networks having capacitance values in the range of milifarads per gram (for example Ni foam network has a specific capacitance value of 13 mF/g), the functionalised 3D graphene electrodes obtained by the process of the invention, presents a specific capacitance in the order of tens of farads per gram. Moreover, the mechanical properties of the obtained functionalised 3D graphene foams are as good as those provided by the metal foam because of the remaining metal in the functionalised 3D graphene foams obtained by the process of the invention. Furthermore, the high specific surface area and high specific capacitance of the functionalised 3D graphene foams obtained by the process of the invention makes it a competitive current collector material.

Thus, in one particular embodiment, the electrode comprising the functionalised 3D graphene foam or graphene-like foam of the present invention and/or the current collector comprising the 3D graphene-foam or graphene-like foam may be used in an electrochemical-energy-storage device. In another aspect, the invention relates to an electrochemical-energy-storage device comprising at least one electrode as described above and/or a current collector as defined above. In a particular embodiment, the electrochemical-energy-storage device comprises an electrode comprising the functionalised three-dimensional graphene or graphene-like foam separated from a second electrode by a separator and immersed in an electrochemical solution. In a particular embodiment, the electrochemical-energy-storage device comprises two electrodes each one comprising the functionalised three-dimensional graphene or graphene-like foam, separated from each other by a separator and immersed in an electrochemical solution. In another particular embodiment, the electrochemical-energy-storage device comprises a current collector comprising the 3D graphene-foam or graphene-like foam of the invention.

In a particular embodiment the electrochemical-energy-storage device is a supercapacitor comprising at least an electrode comprising the functionalised three-dimensional graphene or graphene-like foam of the present invention; and/or at least a current collector comprising the three-dimensional graphene or graphene-like foam of the invention.

## EXAMPLES

### 1. Production of a graphene foam

### 1. a) Procedure performed in $H_2SO_4$ solution (2M) applying a scan rate of 0.5 mV/s.

The preparation of 3D graphene foam from CVD 3D graphene/Ni foam was performed in a three electrode electrochemical cell. The electrochemical cell was formed by a mercury/mercury sulphate reference electrode (RE) (Hg/Hg$_2$SO$_4$ in 0.5 M H$_2$SO$_4$), a platinum mesh as counter electrode (CE) and a 3D graphene/Ni foam as working electrode (WE). The electrochemical solution was a H$_2$SO$_4$ solution 2M.

The process was performed at room temperature (20-22°C) without agitation of the electrolyte. Under these conditions, the open circuit potential of the system was -0.6 V vs Hg/Hg$_2$SO$_4$. Applying a scan rate of 0.5 mV/s from the starting potential -0.6 V up to 0.4 V vs Hg/Hg$_2$SO$_4$, an anodic polarization was performed. Ni was dissolved due to the change of the electrochemical potential. At -0.6 V vs Hg/Hg$_2$SO$_4$, Ni is in electrochemical equilibrium with the electrolyte (H$_2$SO$_4$ solution 2M), the current which flows through the electrochemical cell was null. Then, by changing its equilibrium potential to more anodic potential, the anodic dissolution of Ni started and Ni was oxidized to Ni$^{2+}$, which was incorporated to the electrolyte. During the Ni anodic dissolution process, the current increased proportionally to the amount of Ni which was being dissolved.

The process allowed not only to obtain a damage-free 3D graphene foam, due to sample manipulation absence, but also to stop the Ni dissolution at the desired point to obtain 3D graphene/Ni foams with different Ni thicknesses.

This process was evaluated on graphene-coated Ni foams from a Dutch (Ni foam A) and a Chinese (Ni foam B) supplier, wherein Ni foam A had lower density and pores of larger size than Ni foam B.

After Ni dissolution by the process of the invention, the 3D graphene foams were analysed by micro-Raman spectrometry. Raman spectra of the studied samples (series A and B, using Ni foams A and B respectively) are shown in Figure 5. Two series of samples ranging from graphene-coated nickel foams (sample #1) to graphene foams (sample #6), through graphene foams with various nickel contents (samples #2-#5) were analysed. In order to evaluate the homogeneity, a total of 10 Raman spectra were acquired for each sample.

Micro-Raman charaterisation was performed at room temperature using an $Ar^+$ laser (A = 488 nm) with an incident power of 1 mW using an Olympus microscope (x20 objective) and a "super-notch-plus" filter from Kaiser. The scattered light was analyzed with a Jobin-Yvon HR-460 monochromator coupled to a Peltier cooled Synapse CCD camera. The estimated Raman spatial resolution was around 5 $\mu$m.

The obtained multilayer graphene showed more than 10 layers for the foams corresponding to the series A (graphene-like foam) and between 5 and 10 layers for the series B (graphene foam), which is indicated by the shape and position of the $2D_1$ and $2D_2$ peaks, as well as by the intensity ratio between the 2D and G peaks.

The inventors observed that nickel produced an enhancement of the graphene Raman intensity possibly due to surface enhancement processes (spectrum #1, series A and B). This enhancement decreased as the nickel was being eliminated during the dissolution process until its complete elimination, reaching the standard graphene intensities for free standing graphene (spectrum #6). The samples #2 to #6 are obtained in the Ni dissolution process and correspond to a Ni elimination (in %wt.) of a 30, 50, 70, 90 and 100 %, respectively. Moreover, the intensities measured for graphene-coated nickel foams (spectrum #1) were different for series A and B, where the G peak intensity reached, respectively, a 8.5-fold and a 2.5-fold enhancement compared to free-standing graphene. The inventors rule out that it was only due to the different number of graphene layers in series A and B since the Raman intensity of graphene multilayer increased almost linearly until -10 layers and then decreased for thicker sheets. It is believed that the different observed enhancement was related to the differences in the morphology of the nickel foams. Moreover, a G peak blue-shift of about 3.5 $cm^{-1}$ was observed in both series during the nickel dissolution process.

Figure 5b shows the evolution of the G peak intensity for series A and B depending on the nickel dissolution degree from the as-deposited graphene/nickel foam (spectrum #1, series A and B) to the free-standing graphene foam (spectrum #6, series A). The experimental points correspond to values averaged from more than 10 spectra for each solution step and the error bars correspond to the values of the full width at half-maximum of the data distributions. Therefore, this procedure allows determining the nickel dissolution degree and whether the dissolution process has ended by analyzing the changes in position, shape and intensity of graphene Raman peaks.

The comparative Raman study has demonstrated that the same characteristics and integrity were obtained for the graphene-coated nickel foams and for the graphene-coated nickel foams obtained after CVD deposition.

Figures 4a and 4b show, as a representative example, scanning electron micrographs of the 3D graphene foam obtained by the proposed procedure. The micrograph 4b shows the cross section of the remaining graphene/nickel surface wherein the graphene surface is on top and the remaining nickel is underneath. The 3D graphene foam maintained its structural integrity, continuity and the shape of the nickel template to a large extent.

**1.b) Procedure performed in $Na_2SO_4$ solution (1M) applying a scan rate of 0.5 mV/s.**

A 3D graphene foam from CVD 3D graphene/Ni foam was prepared by the process of the invention using a neutral electrolyte. The procedure was performed in $Na_2SO_4$ aqueous solution 1 M in a three electrode electrochemical cell. The electrochemical cell was formed by a mercury/mercury sulphate reference electrode (RE) ($Hg/Hg_2SO_4$ in 0.5 M $H_2SO_4$), a platinum mesh as counter electrode (CE) and a 3D graphene/Ni foam as working electrode (WE).

The process was performed at room temperature (20-22 °C) without agitation of the electrolyte. Under these conditions, the open circuit potential of the system was -0.68 V vs $Hg / Hg_2SO_4$. Applying a scan rate of 0.5 mV/s from the starting potential -0.68 V up to 0.4 V vs $Hg / Hg_2SO_4$, an anodic polarization was performed. The Ni was dissolved due to the change in the electrochemical potential. At -0.68 V vs $Hg / Hg_2SO_4$ the Ni was in electrochemical equilibrium with the electrolyte ($Na_2SO_4$ solution, 1 M), so there was no current flowing across the electrochemical cell. Then, by moving from its equilibrium potential to more anodic potential, the anodic dissolution of Ni started and Ni was oxidized to $Ni_2^+$, which was incorporated to the electrolyte. During the Ni anodic dissolution process, the current increased proportionally to the amount of Ni which was being dissolved.

The 3D graphene foam samples obtained using a solution of $Na_2SO_4$ 1 M as electrolyte and a scan rate of 0.5mV/s, showed as good structural integrity and quality as the ones obtained by using $H_2SO_4$ 2M as electrolyte.

**2. Production of a functionalised three-dimensional graphene foam**

The preparation of 3D functionalised graphene foam from CVD 3D graphene/Ni foam was performed in the same electrochemical cell mentioned in example 1 a). A silver/silver chloride electrode was used as reference electrode (RE) (Ag/AgCl in saturated KCl, electrode potential of +0.197 Volt vs SHE at 25° C), a platinum mesh as counter electrode (CE) and a 3D graphene/Ni foam as working electrode (WE). The electrochemical solution used as electrolyte comprised metal ions from the dissolution of the metal foam, so that metal oxides or hydroxides thereof could be deposited on the graphene foam. In this case, there was not need to either change the electrolyte ($H_2SO_4$ solution) or to add any additional functionalizing agent to the electrolyte.

The process was performed at room temperature (20-22°C) without agitation of the electrolyte. Under these conditions, the open circuit potential of the system was 0.25 V vs Ag/AgCl. The electrodeposition was carried out by potentiodynamic cathodic electrodeposition. Starting from the open circuit potential of 0.25V vs Ag/AgCl a 0.5 mV/s scan rate was applied until reaching a potential value of -0.9 V vs Ag/AgCl, and then at the same scan rate the process continued backwards until reaching the initial electrochemical potential. In this process, the electrochemical deposition of the $Ni^{2+}$ was carried out onto the 3D graphene foam surface obtaining a thin layer of a mix of NiO/NiOH and $Ni(OH)_2$. Figure 4c shows, as a representative example, the scanning electron micrograph of the functionalised 3D graphene foam obtained by the previously described electrodeposition process. The micrograph shows the homogeneous distribution of the oxide layer on the 3D graphene foam surface.

**3.- Electrochemical characterisation of an electrode formed by the functionalised three-dimensional graphene foam of example 2**

The characterisation of the functionalised 3D graphene foam obtained in example 2 was performed in a three electrode electrochemical cell. The electrochemical cell was formed by a mercury/mercury oxide reference electrode (RE) (Hg/HgO in 1 M NaOH) used in alkaline solutions only. The electrode potential of this electrode was +0.140 V vs. SHE, a platinum mesh as counter electrode (CE) and the functionalised 3D graphene foam as working electrode (WE). The electrochemical solution was a KOH solution 1M. This electrolyte was chosen because Ni oxides and hydroxides were stable in it allowing the electrochemical characterisation of the functionalised 3D graphene foam as an electrode for supercapacitors. The characterisation process was performed at room temperature (20-22°C) without agitation of the electrolyte.

Cyclic voltammetries were obtained from -0.8 to 0.2 V vs. Hg/HgO by applying different voltage scan rates ranging from 0.5 to 50 mV $s^{-1}$. Galvanostatic measurements were carried out within the same voltage range at current densities ranging from 1 to 50 or 100 mA $cm^{-2}$.

Moreover, in order to study the behavior of the obtained 3D graphene foams as an electrode for supercapacitor, the samples were also characterized in a two electrode electrochemical cell, concretely a Swagelok-type cell. In this cell two equal electrodes were separated by a glassy microfiber paper Whatman 934 AH. The electrolyte was a 1 M KOH aqueous solution and the studied potential range was from 0 to 1 V, which is comparable to the potential range from -0.8 to 0.2 V vs. Hg/HgO used in the three electrode electrochemical cell.

Cyclic voltammetries (CVs) obtained in KOH electrolyte at 5 mV/s scan rate of the functionalised 3D graphene foam samples (F-GF) are shown in Figure 6a. For comparison, the CV of the 3D graphene foam (GF Ref), obtained in example 1a is also included. The 3D graphene foam shows a nearly rectangular shape due to the high contribution of the electrical double layer capacitance to the total capacitance of the sample. The non-functionalised 3D graphene foam provides lower capacitance values (20 F/g) in the whole potential range than the functionalised 3D Graphene foam, which presents higher capacitance values (53 F/g) due to the contribution of the pseudo-capacitance of the electrodeposited nickel oxo-hydroxides. This pseudo-capacitance is indicated by the broad peaks observed.

The peaks associated to the faradic redox reaction of the nickel oxides were located between 0.75 and 1 V for the oxidation peak and between 0.5 and 0.2 V for the reduction peak. In the case of the functionalised 3D graphene sample, the figure 6a displays the first 10 CVs carried out. The redox response of the fresh prepared functionalised sample (F-GF) is stabilized after the third CV, indicating good cyclability and fast redox response due to the homogeneous thin oxide layer deposited on the 3D graphene network and the good electronic conduction provided by the latter.

The galvanostatic plots (GCs) obtained in KOH electrolyte at different current densities for the functionalised 3D graphene foam samples (F-GF) are shown in Figure 6b. The lack of well-defined plateaus characteristic of a battery behavior and the nearly triangular shape of the voltage vs. time curves confirm the overall supercapacitor response.

The functionalised 3D graphene foam was further tested to be used as 3D current collector. In this sense, the pores of the foam network were filled with a carbon powder material (NP) with higher specific surface and specific capacitance than the functionalised 3D graphene foam. The resulting electrode formed by the functionalised 3D Graphene foam plus the carbon material NP, was named from now on F-GF+NP.

The galvanostatic plots (GCs) obtained in KOH electrolyte at different current densities for the functionalised 3D Graphene foam samples filled with the carbon material NP (F-GF+NP) are shown in Figure 7a. The characteristic triangular shape of voltage vs. time curve associated to the high electrical double layer capacitance provided by NP, confirms the overall supercapacitor response of the F-GF+NP electrode. The low equivalent series resistance (ESR) obtained proves the validity of the functionalised 3D graphene foam as a stable, resistant and good current collector material with improved properties compared to commonly used current collector consisting of only a 2D metallic sheet.

By using the in situ process of the invention, it is possible to obtain functionalized 3D graphene current collectors with a specific capacitance value of 53 F/g, which is 62 % higher than the specific capacitance of the 3D graphene foam current collector (20 F/g) In particular, the functionalized 3D graphene foams obtained by the process of the invention with a remaining nickel layer having a thickness ranging between 20 and 100 nm, have as good mechanical properties as those provided by the original Ni foam used as template but with increased specific capacitance values, which provide higher energy density values to the supercapacitor. In particular, the obtained samples have higher specific surface area and three orders of magnitude higher specific capacitance values than the Ni foams (13 mF/g) used as template and commonly used as 3D current collector. Thus makes the functionalised 3D graphene foam a very competitive current collector with improved material properties.

Moreover the functionalised 3D graphene foam provides good capacitance retention vs. current density, as shown in Figure 7b. The specific capacitance decreases in only a 25 % from its initial value for F-GF+NP sample, where the functionalised 3D graphene foam is acting as a binder-free 3D current collector integrated inside the electrode.

The variation of the power density, P, (expressed in W/Kg) vs. energy density, W, (expressed in Wh/Kg) is shown in figure 7c in a Ragone plot, figure of merit of the competitive properties of these materials. The energy density (W) and power density (P), both referred to the electrode, were determined according to the equations:

$$W_{electrode} = (1/2) \cdot (C/m) \cdot (V_1 - V_2) \qquad (3)$$

$$P_{electrode} = W/t_d \qquad (4)$$

where $V_1$ is the voltage range during the capacitive discharge, $V_2$ is the voltage drop at the beginning of the discharge, C is the capacitance measured at each current, m is the mass of one electrode, and $t_d$ the discharge time also measured at each current density.

The highest power density values are obtained for the 3D Graphene/Ni foam (GF) and the functionalized 3D Graphene/Ni foam (F-GF). This confirms that the in situ process here proposed is valid to obtain 3D graphene foams with good structural integrity, electronic conduction, and stability in an aqueous aggressive medium.

**Claims**

1. A process for preparing a three-dimensional graphene or graphene-like foam, said process comprises:

   a) providing a three-dimensional metal foam framework,
   b) depositing graphene onto the metal foam framework, so that the graphene reproduces the morphology of the metal foam framework, thus forming a three-dimensional graphene or graphene-like foam deposited onto the metal foam framework,
   c) introducing the three-dimensional graphene or graphene-like foam deposited onto the metal foam framework obtained in step b) in an electrochemical cell, said electrochemical cell comprises:

      - at least three electrodes, and
      - an electrochemical solution having a Standard Reduction Potential ($E^0$) of less than 0.22 V, and wherein said electrochemical solution is devoid of any complexing agent,

   d) applying a voltage scanning within a range of between -0.8 and 0.8 V to the electrochemical cell used in step c) to produce the partial or total dissolution of the metal foam framework.

2. The process according to claim 1, wherein the voltage scanning is applied to the electrochemical cell in step d) within a range of between -0.6 and 0.2 V.

3. The process according to any one of claims 1 and 2, wherein the three-dimensional metal foam framework is made of nickel.

4. The process according to any one of claims 1 to 3, wherein the pH in the electrochemical solution is acidic or neutral.

5. The process according to any one of claims 1 to 4, wherein the electrochemical solution comprises sulfuric acid, sodium sulfate, or combinations thereof.

6. The process according to any of the preceding claims, wherein the voltage scanning applied in step d) is applied at a scanning rate of between 0.5 and 5 mV/s.

**7.** Three-dimensional graphene foam or graphene-like foam obtainable by the process as defined in any of claims 1 to 6 in which the metal foam framework is partially dissolved, so as said graphene foam or graphene-like foam comprises a metal foam framework having a uniform thickness of between 50 and 500 nm homogeneously distributed throughout the graphene foam or graphene-like foam.

**8.** A process for preparing a functionalised three-dimensional graphene or graphene-like foam, said process comprises:

a) providing a three-dimensional metal foam framework,

b) depositing graphene onto the metal foam framework, so that the graphene reproduces the morphology of the metal foam framework, thus forming a three-dimensional graphene or graphene-like foam deposited onto the metal foam framework,

c) introducing the three-dimensional graphene or graphene-like foam deposited onto the metal foam framework obtained in step b) in an electrochemical cell, said electrochemical cell comprises:

- at least three electrodes, and
- an electrochemical solution having a Standard Reduction Potential ($E^0$) of less than 0.22 V and, wherein said electrochemical solution is devoid of any complexing agent,

d) applying a voltage scanning within a range of between -0.8 and 0.8 V to the electrochemical cell used in step c) to produce the partial or total dissolution of the metal foam framework;

e) functionalising the three-dimensional graphene or graphene-like foam obtained in step d) by electrodeposition in an electrochemical solution comprising functionalising agents or precursors thereof.

**9.** The process according to claim 8, wherein the three-dimensional graphene foam or graphene-like foam obtained in step d) is in-situ functionalised in step e) by electrodeposition in the electrochemical solution used in step c).

**10.** The process according to claim 8, wherein the functionalising agents in step e) are selected from transition metals having several oxidation states, aqueous solutions of metallic salts, organometallics, and mixtures thereof.

**11.** The process according to claim 8, wherein the precursors of the functionalising agents in step e) are monomers selected from anilines, pyrroles, carbazoles, indoles, azepines, thiophenes, 3,4-ethylenedioxythiophenes, phenylene sulfides, fluorenes, phenylenes, pyrenes, azulenes, naphtalenes, acetylenes, phenylenevinylenes, and derivatives thereof.

**12.** A functionalised three-dimensional graphene or graphene-like foam obtainable by the process as defined in any of claims 8 to 11.

**13.** The functionalised three-dimensional graphene or graphene-like foam obtainable by the process as defined in any of claims 8 to 11 in which the metal foam framework is partially dissolved, so as said functionalised three-dimensional graphene or graphene-like foam comprises a metal foam framework having a uniform thickness of between 50 and 500 nm homogeneously distributed throughout the functionalised graphene or graphene-like foam.

**14.** An electrode comprising the functionalised three-dimensional graphene or graphene-like foam as defined in any of claims 12 and 13.

**15.** A current collector comprising the three-dimensional graphene or graphene-like foam as defined in any of claims 1 to 7.

**16.** An electrochemical-energy-storage device comprising an electrode as defined in claim 14 and/or a current collector as defined in claim 15.

**Figure 1**

**Figure 2**

Figure 3

Figure 4

**Figure 5**

Figure 6

Figure 7

Europäisches
Patentamt

European
Patent Office

Office européen
des brevets

# EUROPEAN SEARCH REPORT

Application Number

EP 16 38 2227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/031788 A1 (UNIV TEXAS [US]) 5 March 2015 (2015-03-05) | 1-6 | INV. C01B31/04 |
| A | * pages 13,14,16; examples * | 7-16 | |
| X | US 2015/267317 A1 (GUO LIAN [US] ET AL) 24 September 2015 (2015-09-24) | 1-6,12, 14,16 | |
| A | * paragraphs [0003], [0005], [0008], [0019], [0034] * | 8-11,13, 15 | |
| X | WO 2013/162470 A1 (UNIV NANYANG TECH [SG]) 31 October 2013 (2013-10-31) | 12,14,16 | |
| A | * pages 6,7 * | 1-11,13, 15 | |

**TECHNICAL FIELDS
SEARCHED      (IPC)**

C01B

The present search report has been drawn up for all claims

| Place of search | Date of completion of the search | Examiner |
|---|---|---|
| The Hague | 30 November 2016 | Gumann, Sina |

EPO FORM 1503 03.82 (P04C01)

## ANNEX TO THE EUROPEAN SEARCH REPORT
## ON EUROPEAN PATENT APPLICATION NO.

EP 16 38 2227

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2016

| Patent document cited in search report | | Publication date | Patent family member(s) | | Publication date |
|---|---|---|---|---|---|
| WO 2015031788 | A1 | 05-03-2015 | CN | 105492566 A | 13-04-2016 |
| | | | US | 2016209124 A1 | 21-07-2016 |
| | | | WO | 2015031788 A1 | 05-03-2015 |
| US 2015267317 | A1 | 24-09-2015 | NONE | | |
| WO 2013162470 | A1 | 31-10-2013 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130021718 A1, Yager

**Non-patent literature cited in the description**

- **CHEN et al.** *Nat. Mat.,* 2011, vol. 10, 424-428
- **DONG et al.** *Carbon,* 2012, vol. 50, 4865-4870
- **T. MAUYALAGAN et al.** *J. Matter. Chem.,* 2012, vol. 22, 5286-5290
- **KULKARNI et al.** *J. Mater. Chem. A,* 2014, vol. 2, 4989-4998
- **CHEN.** *Nature Materials,* 2011, vol. 10, 424-428